# EUROPEAN PATENT APPLICATION

(11) **EP 2 618 295 A1**
(43) Date of publication of application: **24.07.2013**
(21) Application number: 12183263.8
(22) Date of filing: 06.09.2012
(51) Int. Cl.: G06Q 10/10

(54) **Terminal and schedule displaying method**

(30) Priority: 18.01.2012 CN 201210016310
(71) Applicant: Huawei Device Co., Ltd., Longgang District Shenzhen Guangdong 518129 (CN)
(72) Inventor: Chen, Wang, Shenzhen Guangdong 518129 (CN)
(74) Representative: Thun, Clemens

(57) **Abstract**

The present invention relates to the field of terminals, and discloses a terminal and a schedule displaying method, which are capable of enhancing a display effect of schedule information and achieving a clear distinction between completed and uncompleted schedule work. The terminal includes: an instruction receiving unit, configured to receive an instruction which is for setting a schedule event and of a user, where the schedule event includes schedule content and a schedule date; and a schedule displaying unit, configured to display the schedule event on a time axis. Embodiments of the present invention are used in schedule table functions of various terminals.

## Description

### FIELD OF THE INVENTION

The present invention relates to the field of terminals, and in particular, to a terminal and a schedule displaying method.

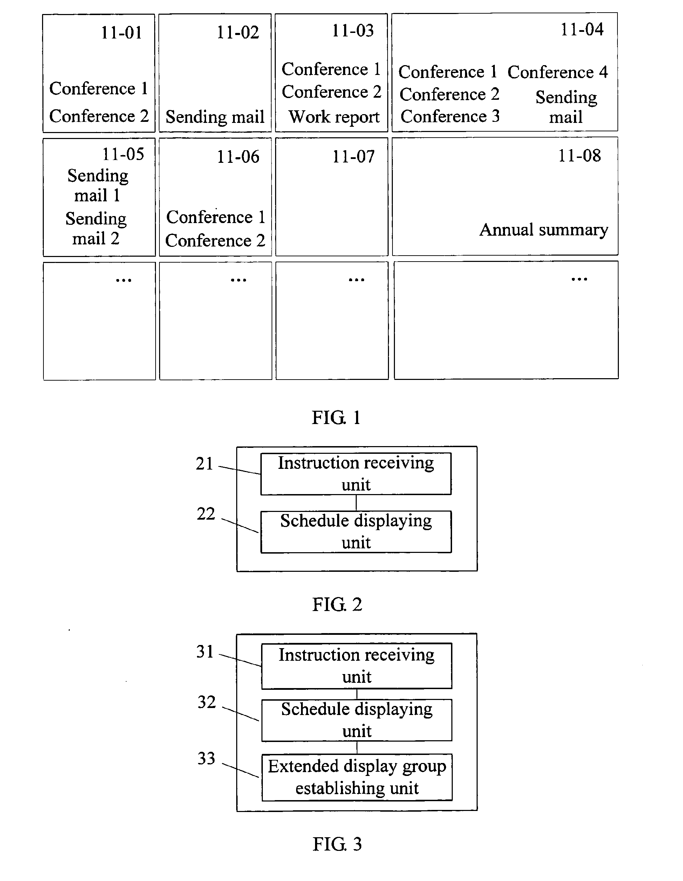

### BACKGROUND OF THE INVENTION In current applications of terminals such as computers and mobile phones, a terminal device generally has a schedule table function, which is used for recording and reminding a user of important matters in the work and life and assisting the user in managing daily affairs. In a conventional schedule table, schedule information and a calendar are integrated together, and content of the schedule information is directly indicated in the calendar, as shown in FIG. 1.

Although in this conventional schedule table presenting manner, information is directly shown at a correspondingly position in the calendar, a display effect of this display manner is not intuitive, and when the amount of schedule information at the same time is excessive, a table is packed with the schedule information, and the display effect is chaotic; furthermore, completed schedule work cannot be displayed in the schedule table in real time, which results in that it is difficult to clearly distinguish the completed schedule work from uncompleted schedule work.

### SUMMARY OF THE INVENTION

Embodiments of the present invention provide a terminal and a schedule displaying method, which are capable of enhancing a display effect of schedule information and achieving a clear distinction between completed and uncompleted schedule work.

In order to achieve the foregoing objectives, the embodiments of the present invention adopt the following technical solutions.

A terminal includes:
an instruction receiving unit, configured to receive an instruction which is for setting a schedule event and of a user, where the schedule event includes schedule content and a schedule date; and
a schedule displaying unit, configured to display the schedule event on a time axis.

A schedule displaying method includes:
receiving an instruction which is for setting a schedule event and of a user, where the schedule event includes schedule content and a schedule date; and
displaying the schedule event on a time axis.

According to the terminal and the schedule displaying method provided by the embodiments of the present invention, the schedule event of the user is displayed in a form of the time axis according to the instruction which is for setting the schedule event and of the user, which enhances the display effect of the schedule information of the user and helps to improve user experience.

### BRIEF DESCRIPTION OF THE DRAWINGS

To illustrate the technical solutions in the embodiments of the present invention or in the prior art more clearly, accompanying drawings required for describing the embodiments or the prior art are briefly introduced below. Apparently, the accompanying drawings in the following description are merely some embodiments of the present invention, and persons of ordinary skill in the art may further obtain other drawings according to the accompanying drawings without making creative efforts.
FIG. 1 is a schematic diagram of a schedule table in the prior art;
FIG. 2 is a block diagram of a terminal according to a first embodiment of the present invention;
FIG. 3 is a block diagram of a terminal according to a second embodiment of the present invention;
FIG. 4 is a schematic diagram for displaying a schedule on a terminal display interface according to the second embodiment of the present invention;
FIG. 5 is another schematic diagram for displaying a schedule on a terminal display interface according to the second embodiment of the present invention;
FIG. 6 is another schematic diagram for displaying a schedule on a terminal display interface according to the second embodiment of the present invention;
FIG. 7 is a schematic diagram for displaying a schedule having an extended display group according to the second embodiment of the present invention;
FIG. 8 is another schematic diagram for displaying a schedule on a terminal display interface according to the second embodiment of the present invention; and
FIG. 9 is a flow chart of a schedule displaying method according to a third embodiment of the present invention.

### DETAILED DESCRIPTION OF THE EMBODIMENTS

The technical solutions in the embodiments of the present invention are described clearly and completely below with reference to the accompanying drawings in the embodiments of the present invention. Evidently, the embodiments to be described are only part of rather than all of the embodiments of the present invention. Based on the embodiments of the present invention, all other embodiments obtained by persons of ordinary skill in the art without making creative efforts shall fall within the protection scope of the present invention.

### Embodiment 1

An embodiment of the present invention provides a terminal; as shown in FIG. 2, the terminal includes: an instruction receiving unit 21 and a schedule displaying unit 22.

The instruction receiving unit 21 is configured to receive an instruction which is for setting a schedule event and of a user, where the schedule event includes schedule content and a schedule date.

The schedule displaying unit 22 is configured to display the schedule event on a time axis.

Here, calendar time is recorded on the time axis, and calendar time which is of the time axis and corresponds to a display position of each schedule event is consistent with a schedule date of each schedule event.

According to the terminal provided by the first embodiment of the present invention, the schedule event of the user is displayed in a form of the time axis according to the instruction which is for setting the schedule event and of the user, which enhances a display effect of schedule information of the user and helps to improve user experience.

### Embodiment 2

An embodiment of the present invention provides a terminal, as shown in FIG. 3, which includes: an instruction receiving unit 31, a schedule displaying unit 32 and an extended display group establishing unit 33.

The instruction receiving unit 31 is configured to receive an instruction which is for setting a schedule event and of a user, where the schedule event includes schedule content and a schedule date and further include a schedule state, and the schedule state includes a completed state and an uncompleted state. Optionally, schedule states of newly established schedule events are all set to the uncompleted state.

The schedule displaying unit 32 is configured to display the schedule event on a time axis.

Here, calendar time is recorded on the time axis, and calendar time which is of the time axis and corresponds to a display position of each schedule event is consistent with a schedule date of each schedule event. The schedule displaying unit 32 is further configured to display the schedule state while displaying the schedule event.

Specifically, calendar time is marked on the time axis, and the schedule displaying unit 32 further includes a first displaying subunit, which is configured to display each schedule event on calendar time which corresponds to the schedule date and is on the time axis.

The extended display group establishing unit 33 is configured to establish, when the number of schedule events on a same schedule date exceeds a display range of a display interface, an extended display group for a schedule event that exceeds the display range. The schedule displaying unit 32 is further configured to display a graphic object of the extended display group at a position corresponding to calendar time of the time axis; in a case where an extended display group is established, when the terminal receives an instruction from the user for opening the graphic object of the extended display group, each schedule event of the extended display group is displayed in a newly established interface.

Further, the schedule displaying unit 32 further includes: a second displaying subunit and a third displaying subunit.

The second displaying subunit is configured to display the schedule event at two sides of the time axis according to the schedule state of the schedule event. Specifically:
a schedule event whose schedule state is uncompleted is displayed at one side of the time axis; and a schedule event whose schedule state is completed is displayed at the other side of the time axis.

The third displaying subunit is configured to move, when the schedule state of the schedule event is changed, the schedule event to the other side of the time axis for display.

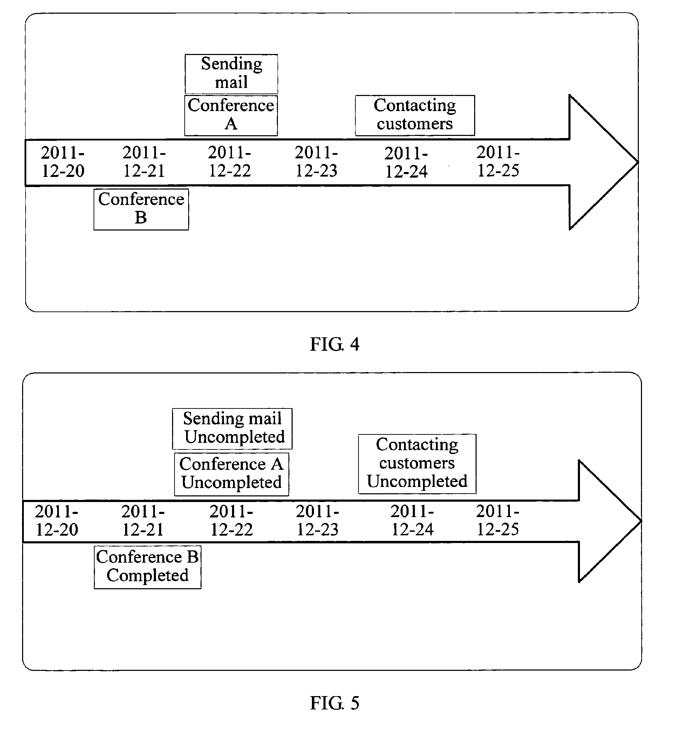

The schedule content and the schedule states displayed in the terminal are described through an example, as shown in FIG. 4. In FIG. 4, the time axis is along a horizontal direction, calendar time is recorded on the time axis, and for example only, the calendar time is from 2011-12-20 to 2011-12-25. It is assumed that schedule events T1, T2, T3 and T4 are separately established by the terminal according to an instruction which is for setting a schedule event and of the user, and schedule content, schedule dates and schedule states of T1, T2, T3 and T4 are as shown in Table 1 below respectively:

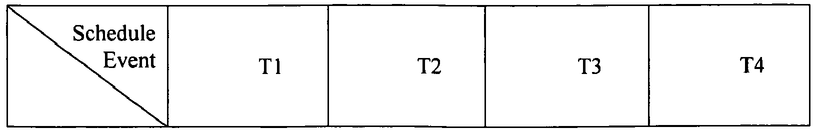

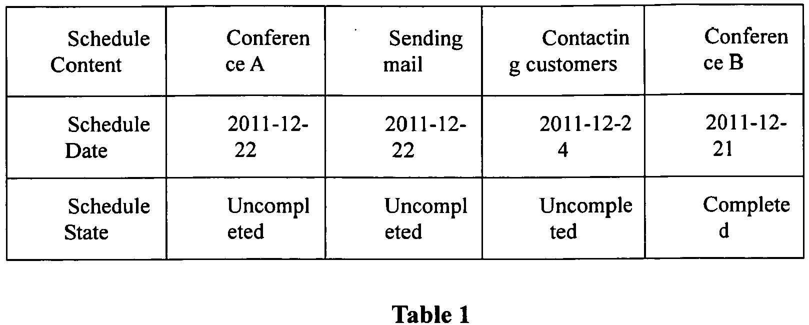

Accordingly, a corresponding display state in a terminal display interface is as shown in FIG. 4.

It can be seen that, in a display shown in FIG. 4, an uncompleted schedule event is displayed at one side of the time axis in the terminal display interface while a completed schedule event is displayed at the other side of the time axis, schedule content is clearly displayed for each schedule event, and each schedule event corresponds to calendar time on the time axis. In the display of FIG. 4, schedule states are not displayed in the schedule events, but the schedule states may also be displayed concurrently, as shown in FIG. 5. After a schedule event is completed, the completed schedule event is moved from one side of the time axis to the other side of the time axis for display, and a schedule state is changed into completed.

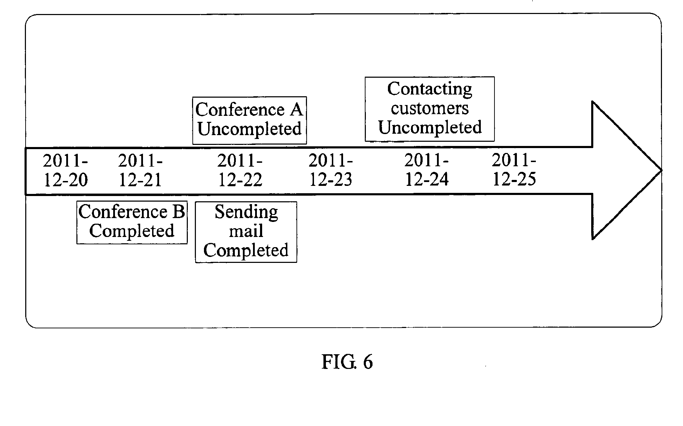

Still taking FIG. 5 mentioned above as an example for illustration, at this time, if there is a schedule event which is changed from the uncompleted state into the completed state, for example, T2 is changed into the completed state, the third displaying subunit of the schedule displaying unit 32 moves the completed schedule event T2 from one side of the time axis to the other side of the time axis for display, and its schedule state is also changed into the completed state, as shown in FIG. 6.

In practical applications, a change of a schedule state from the uncompleted state to the completed state may be achieved by manual setting of the user, and may also be achieved automatically by the terminal according to a preset condition, for instance, it may be specified that when the mail is sent successfully, a schedule state corresponding to this schedule event of sending mail is changed from the uncompleted state into the completed state. Furthermore, the description in the embodiment of the present invention is illustrated by changing the schedule state from uncompleted into completed; in practical scenarios, a schedule state may also be changed from completed into uncompleted according to user needs, which is not limited in the embodiment of the present invention.

The extended display group establishing unit 33 is configured to establish, when the number of the schedule events on the same schedule date exceeds a display range of the terminal display interface, an extended display group for each schedule event which is on the same schedule date and exceeds the display range. Correspondingly, the schedule displaying unit 32 is further configured to display a graphic object of the extended display group at a position corresponding to calendar time of the time axis; optionally, in a case where an extended display group is established, when the terminal receives an instruction from the user for opening the graphic object of the extended display group, each schedule event of the extended display group is displayed in a newly established interface. A display of the extended display group is illustrated through an example on the basis of Table 1, where in addition to the schedule events T1 and T2, schedule dates of schedule events R1 to R4 as shown in Table 2 below are also 2011-12-22:

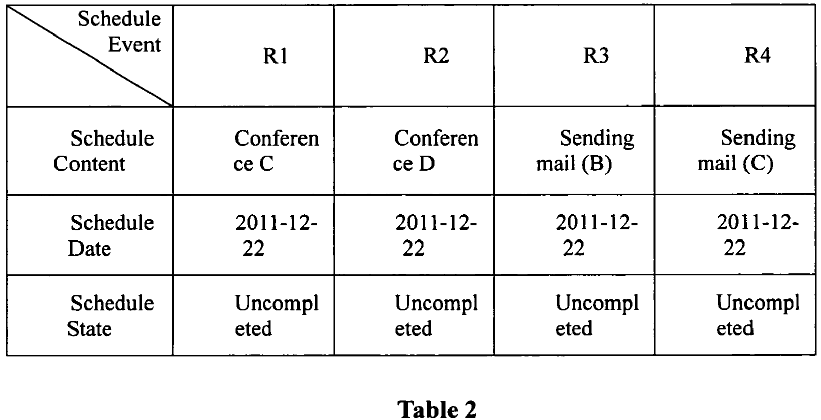

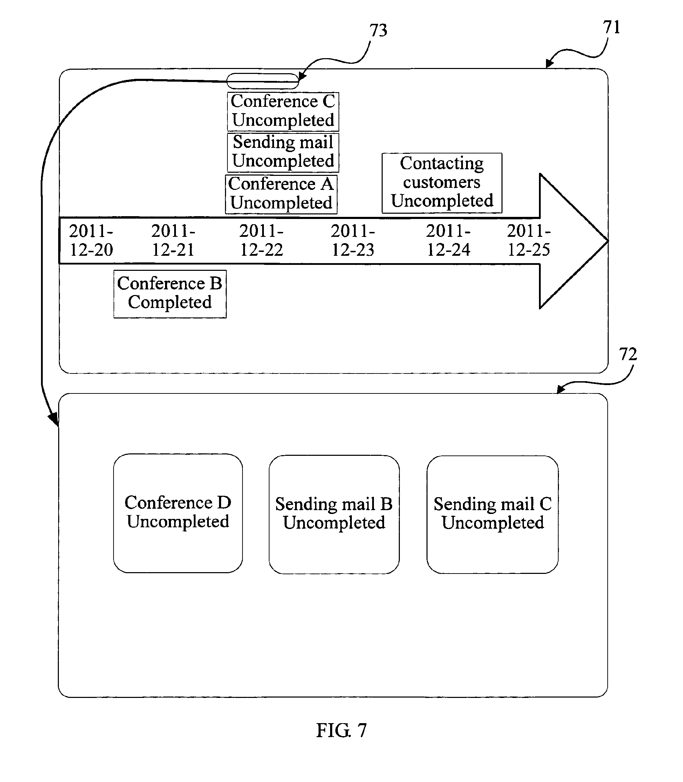

Furthermore, because display space at one side of the time axis of the terminal display interface is not sufficient to display all the schedule events on 2011-12-22 (here it may be assumed that the one side and the other side of the time axis can only allow a display of at most three schedule events), an extended display group is established for each schedule event which is on the same schedule date and exceeds the display range, and a graphic object of the extended display group is displayed. As shown in FIG. 7, schedule events and an extended display group 73 are both displayed in a terminal display interface 71. The extended display group 73 is established in FIG. 7 exemplarily according to R2, R3 and R4, and definitely, the extended display group 73 may also be established according to any three of R1 to R4. Furthermore, a case described in the embodiment of the present invention is that, it is allowed that only three schedule events are displayed at one side or the other side of the time axis; in practical applications, a display range of a terminal display interface varies, and accordingly the number of schedule events that can be displayed also varies, which is not limited in practical scenarios. On the basis of a display manner in FIG. 7, if an instruction from the user for opening the graphic object of the extended display group (for instance, for performing a mouse clicking or screen touch operation on the graphic object) is received, each schedule event of the extended display group 73 are displayed in a newly established interface 72.

Further, the schedule event may also includes schedule importance, and in this case, the schedule displaying unit 32 further includes a fourth displaying subunit, and the fourth displaying subunit is configured to display, according to schedule importance of the schedule events and different attributes, the schedule events on the time axis.

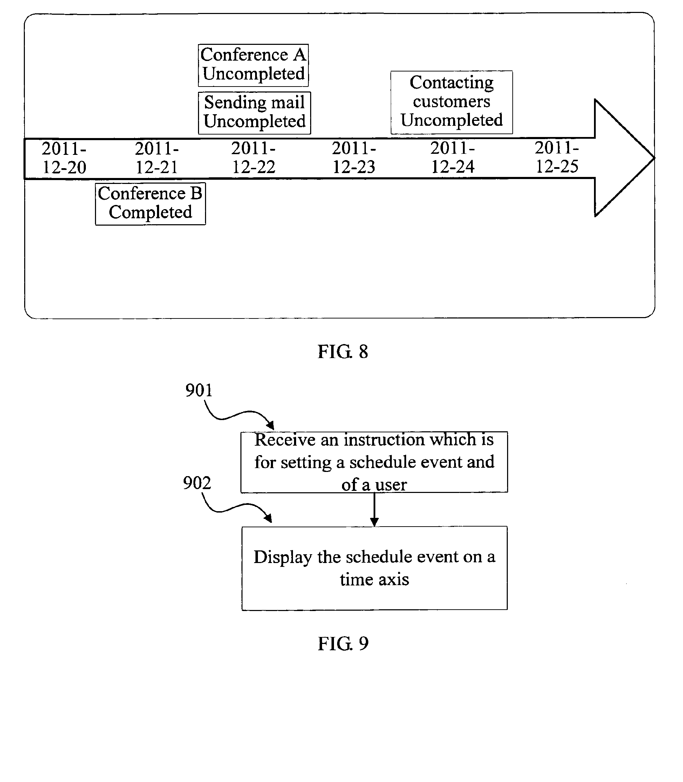

Still taking Table 1 as an example, if importance of the schedule event T1 is higher than that of the schedule event T2, a display is as shown in FIG. 5; while if the importance of the schedule T1 is lower than that of the schedule event T2, a display is as shown in FIG. 8, so that a schedule event with higher schedule content importance is closer to the time axis than a schedule event with lower schedule content importance. Definitely, in practical use, in order to distinguish the importance of the schedule events more obviously, schedule events with different importance may be marked and displayed in the terminal display interface by using different colors.

The terminal described in the embodiment of the present invention may be a mobile phone, a tablet computer, a personal digital assistant, a portable computer or a desktop computer and so on, which is not limited in the embodiment of the present invention.

Furthermore, in the embodiment of the present invention, the time axis in the terminal display interface may extend in a transverse direction, and may also extend in a longitudinal direction. For instance, when the terminal performs landscape displaying, the time axis may extend in the transverse direction, and the completed and uncompleted schedule events may be arranged at upper and lower sides of the time axis respectively; and when the terminal performs portrait displaying, the time axis may extend in the longitudinal direction, and the completed and uncompleted schedule events may be arranged at left and right sides of the time axis respectively. Because a portion of the time axis and a schedule event at its two sides that can be displayed in the terminal display interface are limited, the time axis in the terminal display interface may further be operated to move through a mouse, key or touch screen operation of the terminal, so that an earlier schedule event and a future schedule event may be viewed; a specific solution is not limited in the embodiment of the present invention.

Further, in a schedule display interface of the terminal in the embodiment of the present invention, the schedule content may be indicated by using a graphic icon, or a topic of a schedule event may be described with simple language; and when the topic of the schedule event is further operated by the user (for instance, the topic of the schedule event is clicked with a mouse), detailed content of the schedule event is displayed in a new interface, which is not limited by the embodiment of the present invention.

In the terminal provided by the second embodiment of the present invention, according to the instruction which is for setting the schedule event and of the user, the uncompleted schedule events may be displayed at one side of the time axis in the terminal display interface and the completed schedule events may be displayed at the other side of the time axis, and meanwhile, displays of the schedule events may be distinguished and arranged according to the importance of the schedule events, and more schedule events may further be displayed in the new interface through the extended display group. According to the terminal and the method for separately displaying the schedule event at the two sides of the time axis along the time axis, a display effect of schedule information is enhanced, and the completed and uncompleted schedule work and importance of the schedule work can be clearly distinguished, thereby improving user experience.

### Embodiment 3

An embodiment of the present invention further provides a schedule displaying method; as shown in FIG. 9, the method includes the following steps:
901: Receive an instruction which is for setting a schedule event and of a user.

The schedule event includes schedule content and a schedule date; the schedule event further includes a schedule state, and the schedule state includes a completed state and an uncompleted state. Optionally, schedule states of newly established schedule events are all set to the uncompleted state by default.

902: Display the schedule event on a time axis according to the instruction for setting the schedule event.

Here, calendar time is marked on the time axis; and when schedule displaying is performed, each schedule event is displayed on calendar time which corresponds to the schedule date and is on the time axis.

During a specific display, the schedule event may be displayed at two sides of the time axis according to the schedule state of the schedule event, for instance, a schedule event whose schedule state is uncompleted is displayed at one side of the time axis; while a schedule event whose schedule state is completed is displayed at the other side of the time axis. Optionally, when the state of the schedule event is changed, the schedule event is displayed at the other side. For example, when a schedule event is completed, the completed schedule event is moved to the other side which is of the time axis and opposite to the side of the time axis where the uncompleted schedule event is displayed, for display.

In practical applications, a change of a schedule state from the uncompleted state to the completed state may be achieved by manual setting of the user, and may also be achieved automatically by a terminal according to a preset condition, for instance, it may be specified that when mail is sent successfully, a schedule state corresponding to this schedule event of sending mail is changed from the uncompleted state into the completed state. Furthermore, the description in the embodiment of the present invention is illustrated by changing the schedule state from uncompleted into completed; however, in practical scenarios, a schedule state may also be changed from completed into uncompleted according to user needs, which is not limited in the embodiment of the present invention.

Furthermore, in the method provided by the embodiment of the present invention, when the number of schedule events on a same schedule date exceeds a display range of a display interface of the terminal, an extended display group is further established for a schedule event which is on the same schedule date and exceeds the display range, and a graphic object of the extended display group is displayed at a position corresponding to calendar time of the time axis; optionally, in a case where an extended display group is established, when the terminal receives an instruction from the user for opening the graphic object of the extended display group, each schedule event of the extended display group is displayed in a newly established interface. For its specific description, reference may be made to the foregoing description about the terminal part of the embodiments of the present invention, and the details are not repeatedly described here.

Further optionally, the instruction for setting the schedule event may further include information about schedule content importance; in this case, in the method provided by the embodiment of the present invention, the schedule events may further be displayed on the time axis according to the schedule content importance and different attributes. The different attributes include at least one of attributes such as a distance between a schedule event and the time axis and a display color of a schedule event. For example, when schedule events having a same schedule date are displayed, a schedule event with higher schedule content importance is closer to the time axis than a schedule event with lower schedule content importance, or a schedule event with higher schedule importance is displayed in red, and so on. For its specific description, reference may be made to the foregoing description about the terminal part of the embodiments of the present invention, and the details are not repeatedly described here.

Furthermore, in the method provided by the embodiment of the present invention, the time axis in the terminal display interface may extend in a transverse direction, and may also extend in a longitudinal direction. For instance, when the terminal performs landscape displaying, the time axis may extend in the transverse direction, and the completed and uncompleted schedule events may be arranged at upper and lower sides of the time axis respectively; and when the terminal performs portrait displaying, the time axis may extend in the longitudinal direction, and the completed and uncompleted schedule events may be arranged at left and right sides of the time axis respectively. Because a portion of the time axis and a schedule event at its two sides that can be displayed in the terminal display interface are limited, the time axis in the terminal display interface may further be operated to move through a mouse, key or touch screen operation of the terminal, so that an earlier schedule event and a future schedule event may be viewed.

Besides displayed transversely or longitudinally along a straight line, the time axis displayed in the terminal display interface in the embodiment of the present invention may also be displayed by using other graphic manners, for instance, the time axis is set as a curve with a certain radian or as a ring, and so on, which is not limited in the embodiment of the present invention.

In the schedule displaying method provided in the third embodiment of the present invention, according to the instruction which is for setting the schedule event and of the user, the uncompleted schedule events may be displayed at one side of the time axis in the terminal display interface and the completed schedule events may be displayed at the other side of the time axis, and meanwhile, displays of the schedule events may be distinguished and arranged according to the importance of the schedule events, and more schedule events may further be displayed in a new interface through the extended display group. According to the terminal and the method for separately displaying the schedule event at the two sides of the time axis along the time axis, a display effect of schedule information is enhanced, and the completed and uncompleted schedule work and importance of the schedule work can be clearly distinguished, thereby improving user experience.

Persons of ordinary skill in the art should understand that all or part of the steps of the foregoing method embodiment may be implemented by a program instructing relevant hardware. The program may be stored in a computer readable storage medium. When the program runs, the steps of the foregoing method embodiment may be executed. The storage medium may be any medium capable of storing program codes, such as ROM, RAM, magnetic disk, or optical disk.

Detailed above are only specific embodiments of the present invention, and are not intended to limit the protection scope of the present invention. Any variation or replacement that may be easily derived by those skilled in the art within the technical scope disclosed in the present invention shall fall within the protection scope of the present invention. Therefore, the protection scope of the present invention is subject to the protection scope of the claims.

## Claims

1. A terminal, comprising:
an instruction receiving unit, configured to receive an instruction which is for setting a schedule event and of a user, wherein the schedule event comprises schedule content and a schedule date; and
a schedule displaying unit, configured to display the schedule event on a time axis.

2. The terminal according to claim 1, wherein calendar time is marked on the time axis, and the schedule displaying unit comprises:
a first displaying subunit, configured to display each schedule event on calendar time which corresponds to the schedule date and is on the time axis.

3. The terminal according to claim 2, further comprising:
an extended display group establishing unit, configured to establish, when the number of schedule events on a same schedule date exceeds a display range of a display interface, an extended display group for a schedule event that exceeds the display range.

4. The terminal according to any one of claims 2 to 3, wherein the schedule event further comprises a schedule state, and the schedule displaying unit further comprises:
a second displaying subunit, configured to display the schedule event at two sides of the time axis according to the schedule state of the schedule event.

5. The terminal according to claim 4, wherein the second displaying subunit is specifically configured to:
display a schedule event whose schedule state is uncompleted at one side of the time axis; and
display a schedule event whose schedule state is completed at the other side of the time axis.

6. The terminal according to any one of claims 4 to 5, wherein the schedule displaying unit further comprises:
a third displaying subunit, configured to move, when the schedule state of the schedule event is changed, the schedule event to the other side of the time axis for display.

7. The terminal according to any one of claims 1 to 6, wherein the schedule event further comprises schedule importance, and the schedule displaying unit further comprises:
a fourth displaying subunit, configured to display, according to schedule importance of the schedule events and different attributes, the schedule events on the time axis.

8. The terminal according to claim 7, wherein the different attributes comprise at least one of attributes such as a distance between a schedule event and the time axis and a display color of a schedule event.

9. The terminal according to any one of claims 1 to 8, wherein the time axis is displayed in the display interface transversely or longitudinally.

10. A schedule displaying method, comprising:
receiving an instruction which is for setting a schedule event and of a user, wherein the schedule event comprises schedule content and a schedule date; and
displaying the schedule event on a time axis.

11. The method according to claim 10, wherein calendar time is marked on the time axis, and the displaying the schedule event on the time axis comprises:
displaying each schedule event on calendar time which corresponds to the schedule date and is on the time axis.

12. The method according to claim 11, further comprising:
establishing, when the number of schedule events on a same schedule date exceeds a display range of a display interface, an extended display group for a schedule event that exceeds the display range.

13. The method according to any one of claims 11 to 12, wherein the schedule event further comprises a schedule state, and the displaying the schedule event on the time axis further comprises:
displaying the schedule event at two sides of the time axis according to the schedule state of the schedule event.

14. The method according to claim 13, wherein the displaying the schedule event at the two sides of the time axis according to the schedule state of the schedule event comprises:
displaying a schedule event whose schedule state is uncompleted at one side of the time axis;
and
displaying a schedule event whose schedule state is completed at the other side of the time axis.

15. The method according to any one of claims 13 to 14, wherein the displaying the schedule event on the time axis further comprises:
moving, when the schedule state of the schedule event is changed, the schedule event to the other side of the time axis for display.

16. The method according to any one of claims 10 to 15, wherein the schedule event comprises schedule importance, and the displaying the schedule event on the time axis comprises:
displaying, according to schedule importance of the schedule events and different attributes, the schedule events on the time axis.

17. The method according to claim 16, wherein the different attributes comprise at least one of attributes such as a distance between a schedule event and the time axis and a display color of a schedule event.

18. The method according to any one of claims 10 to 17, wherein the time axis is displayed in the display interface transversely or longitudinally.
